# EUROPEAN PATENT APPLICATION

(11) **EP 4 451 395 A1**
(43) Date of publication of application: **23.10.2024**
(21) Application number: 24158848.2
(22) Date of filing: 21.02.2024
(51) Int. Cl.: H01M 10/00, H01M 50/179, H01M 50/474, H01M 50/477, H01M 50/584, H01M 50/547

(54) **SECONDARY BATTERY**

(30) Priority: 21.04.2023 KR 20230052568
(71) Applicant: Samsung SDI Co., Ltd., Yongin-si, Gyeonggi-do 17084 (KR)
(72) Inventor: PARK, Gun Gue, 17084 Yongin-si (KR); JUN, Woo Tae, 17084 Yongin-si (KR); KO, Sung Gwi, 17084 Yongin-si (KR); YU, Gwan Hyeon, 17084 Yongin-si (KR); KIM, Myung Seob, 17084 Yongin-si (KR); YOO, Yoon Sun, 17084 Yongin-si (KR); JUNG, Hyun Ki, 17084 Yongin-si (KR)
(74) Representative: Marks & Clerk LLP

(57) **Abstract**

A secondary battery (100) includes: an electrode assembly (110); a can (120) having a lower surface and a side surface and accommodating the electrode assembly therein; a cap plate (130) coupled to an upper end of the can; a terminal (160) on the lower surface of the can; and an insulator (190) having a plate-shaped portion (191) between the electrode assembly and the lower surface of the can and a wing portion (192) extending upwardly from a circumference of the plate-shaped portion. The wing portion has a cut portion (192A).

## Description

### BACKGROUND

### 1. Field

Aspects of embodiments of the present disclosure relate to a secondary battery.

### 2. Description of Related Art

Different from a primary battery that is not designed to be charged, a secondary battery is a battery that is designed to be charged and discharged. Low-capacity batteries are used in portable, small electronic devices, such as smart phones, feature phones, tablet computers, notebook computers, digital cameras, or camcorders, and large-capacity batteries are widely used as power sources for driving motors in hybrid vehicles and electric vehicles or as power storage devices (e.g., home or utility scale power storage devices).

Secondary batteries can be classified into cylindrical, prismatic, or pouch-type secondary batteries based on their shape. Each of the cylindrical, prismatic, and pouch-type secondary battery generally includes an electrode assembly, a case, a cap assembly, etc., and has a structure in which the case is electrically connected to a negative electrode, and the cap assembly is electrically connected to a positive electrode.

The above information disclosed in this Background section is for enhancement of understanding of the background of the present disclosure, and therefore, it may contain information that does not constitute prior art.

### SUMMARY

Embodiments of the present disclosure provide a secondary battery capable of securely and easily insulating an electrode assembly and a case from each other.

A secondary battery, according to an embodiment of the present disclosure, includes: an electrode assembly; a can having a lower surface and a side surface and accommodating the electrode assembly therein; a cap plate coupled to an upper end of the can; a terminal on the lower surface of the can; and an insulator having a plate-shaped portion between the electrode assembly and the lower surface of the can and a wing portion extending upwardly from a circumference of the plate-shaped portion. The wing portion has a cut portion.

The cut portion may extend downwardly from an upper end of the wing portion.

The cut portion may extend a length smaller than a height of the wing portion.

The cut portion may include a plurality of cut portions arranged along a circumferential direction of the wing portion.

The plate-shaped portion may have a smaller diameter than the can.

Before the insulator is installed into the can, an upper end of the wing portion may have a diameter larger than that of the can, and when the insulator is accommodated in the can, the wing portion may be deformed such that the upper end of the wing portion has a diameter corresponding to that of the can.

An upper end of the wing portion may be in close contact with the side surface of the can.

The cut portion may have a straight line shape.

The cut portion may have a larger width at a lower portion thereof than at an upper portion thereof.

The cut portion may have a V-shape.

The wing portion may extend around a periphery of a lower portion of a side surface of the electrode assembly.

The wing portion may contact an edge of a lower end of the electrode assembly.

At least some of the above and other features of the invention are set out in the claims.

### BRIEF DESCRIPTION OF DRAWINGS

FIG. 1 is a cross-sectional view of a secondary battery according to an embodiment of the present disclosure.
FIG. 2 is a cross-sectional perspective view of the part II of FIG. 1.
FIG. 3 is a perspective view of an insulator in the secondary battery shown in FIGS. 1 and 2.
FIG. 4 is a schematic diagram of the secondary battery shown in FIGS. 1 to 3 illustrating a process of inserting an insulator into a can.
FIG. 5 is a perspective view of an insulator of a secondary battery according to another embodiment of the present disclosure.
FIG. 6 is a perspective view of an insulator of a secondary battery according to another embodiment of the present disclosure.
FIG. 7 is a cross-sectional view of an insulator of a secondary battery according to another embodiment of the present disclosure.

### DETAILED DESCRIPTION

Hereinafter, embodiments of the present disclosure will be described, in detail, with reference to the accompanying drawings. These embodiments of the present disclosure are provided to more completely explain the present disclosure to those skilled in the art, and the following embodiments may be modified to have various other forms. In other words, the present disclosure may be embodied in many different forms and should not be construed as being limited to the embodiments set forth herein. Rather, these embodiments are provided so that this disclosure will be thorough and complete and will convey the aspects and features of the present disclosure to those skilled in the art.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. For example, the expression "at least one of a, b, or c" indicates only a, only b, only c, both a and b, both a and c, both b and c, all of a, b, and c, or variations thereof. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

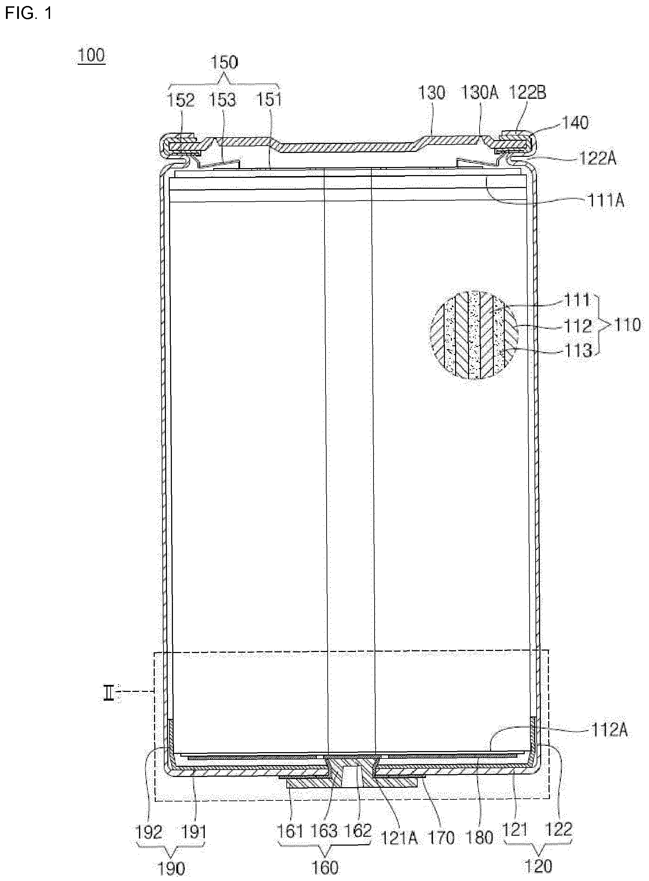

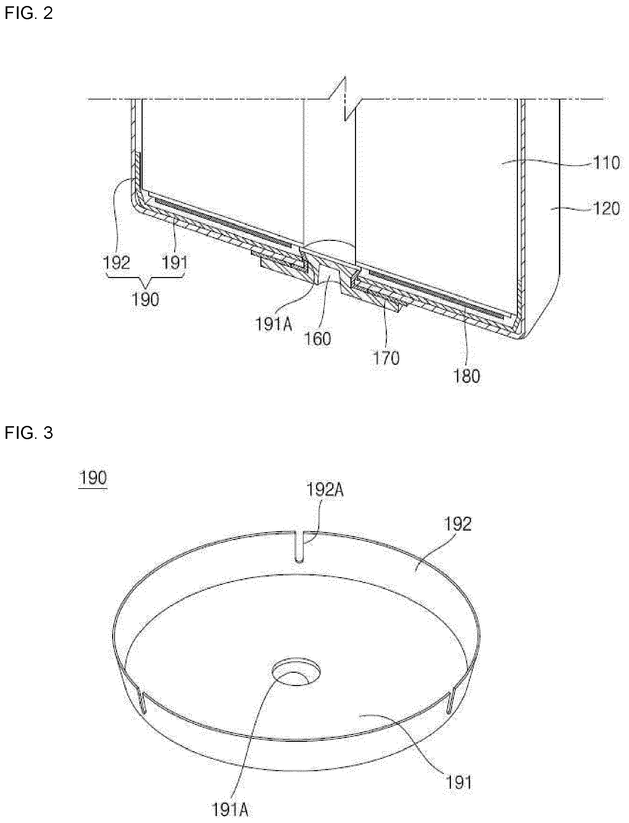

FIG. 1 is a cross-sectional view of a secondary battery 100 according to an embodiment of the present disclosure, and FIG. 2 is a cross-sectional perspective view of the part II of FIG. 1.

Referring to FIGS. 1 and 2, the secondary battery 100, according to an embodiment of the present disclosure, includes an electrode assembly 110, a can (herein, also referred to as a case) 120, a cap plate 130, a first gasket 140, a first current collector plate 150, a terminal 160, a second gasket 170, a second current collector plate 180, and an insulator 190.

The electrode assembly 110 includes a first electrode plate 111, a second electrode plate 112, and a separator 113.

The first electrode plate 111 may be any one of a negative electrode plate and a positive electrode plate. For example, when the first electrode plate 111 is a negative electrode plate, the first electrode plate 111 may include a current collector plate (e.g., a negative electrode current collector plate) made of a thin, conductive metal plate, such as copper or nickel foil or mesh, having a coating portion (e.g., a negative electrode coating portion) coated with an active material (e.g., a negative electrode active material) on one or both sides thereof and a non-coating portion 111A (e.g., a negative electrode non-coating portion) not coated with the negative electrode active material. The negative electrode active material may include, for example, a carbon-based material, silicon (Si), tin (Sn), tin oxide, tin alloy composite, a transition metal oxide, lithium metal nitrite, or a metal oxide.

The second electrode plate 112 may be any one of a negative electrode plate and a positive electrode plate. For example, when the second electrode plate 112 is a positive electrode plate, the second electrode plate 112 may include a current collector plate (e.g., a positive electrode current collector plate) made of a thin, conductive metal plate, such as aluminium foil or mesh, having a coating portion (e.g., a positive electrode coating portion) coated with an active material (e.g., a positive electrode active material) on one or both sides thereof and a non-coating portion 112A (e.g., a positive electrode non-coating portion) not coated with the positive electrode active material. The positive electrode active material may include a chalcogenide compound, for example, a complex metal oxide, such as LiCoO₂, LiMn₂O₄, LiNiO₂, LiNiMnO₂, etc.

The separator 113 is interposed between the first electrode plate 111 and the second electrode plate 112 to prevent a short circuit between the first electrode plate 111 and the second electrode plate 112. The separator 113 may be made of, for example, polyethylene, polypropylene, or a porous copolymer of polyethylene and polypropylene.

The electrode assembly 110 is formed by stacking the first electrode plate 111, the separator 113, the second electrode plate 112, and the separator 113 in that order and winding the stack around a common axis in the form of a so-called jelly-roll. The first electrode plate 111 and the second electrode plate 112 may be arranged partially offset from each other such that the non-coating portion 111A of the first electrode plate 111 protrudes from one side (e.g., the upper side in FIG. 1) of the electrode assembly 110 and the non-coating portion 112A of the second electrode plate 112 protrudes from the opposite side (e.g., the lower side in FIG. 1) of the electrode assembly 110.

The can 120 may have a cylindrical shape overall.

In some embodiments, the can 120 may have a lower surface 121 formed in a disk shape and a side surface 122 extending upwardly from the circumference of the lower surface 121. The lower surface 121 and the side surface 122 may be integrally formed. For example, the can 120 may be formed by a deep drawing process. Because the upper surface (e.g., the upper end) of the can 120 is open, the insulator 190, the electrode assembly 110, an electrolyte, etc. are inserted into the inside of the can 120 through the open upper end of the can 120, and then the upper end of the can 120 may be closed by the cap plate 130.

In the drawings, the can 120 is illustrated as including a beading part (e.g., a bead) 122A and a crimping part (e.g., a crimp) 122B.

The beading part 122A may be formed by concavely press-fitting the upper part of the can 120 inwardly after the electrode assembly 110 is inserted into the can 120. The beading part 122A prevents the electrode assembly 110 from being separated from the can 120 and supports the cap plate 130.

The crimping part 122B is formed by inwardly bending the upper end of the can 120 after the cap plate 130 is seated on the beading part 122A to surround the edge of the cap plate 130 and, thus, fixes the cap plate 130.

In addition, the can 120 has a hole 121A formed in the lower surface 121 for installing the terminal 160.

The can 120 may be made of a conductive metal, such as steel, steel alloy, aluminium, or aluminium alloy, and may be electrically connected to the first electrode plate 111 of the electrode assembly 110 through the first current collector plate 150. Therefore, as described above, when the first electrode plate 111 is a negative electrode plate, the can 120 has a negative polarity.

The cap plate 130 is coupled to the upper end of the can 120. The cap plate 130 may be insulated from the can 120 by the first gasket 140. That is, the cap plate 130 may not have any polarity (e.g., may be electrically floating). Therefore, the cap plate 130 does not necessarily have to be made of a conductive metal but, to provide sufficient rigidity, may be made of a metal.

The cap plate 130 may have a notch 130A. The notch 130A acts as a safety vent. For example, when gas is generated inside the can 120, raising the pressure inside the can 120, the notch 130A may be spontaneously cut (e.g., may spontaneously burst) to release the gas and pressure, thereby preventing an uncontrolled explosion of the secondary battery 100.

The notch 130A may be formed along an edge of the cap plate 130. Therefore, when the pressure is applied, the notch 130A can be cut (e.g., may burst) more easily, and when the notch 130A is cut, the fracture area (e.g., the open area or exhaust area) can be made as wide as possible so that the gas and pressure can be released quickly.

In addition, the notch 130A may be formed in an inner surface of the cap plate 130. Accordingly, the notch 130A may not be unintentionally damaged or corroded due to external factors.

The first gasket 140 is disposed between the can 120 and the cap plate 130 to tightly seal a space therebetween while insulating the can 120 and the cap plate 130 from each other.

The first current collector plate 150 is disposed on the upper side of the electrode assembly 110 and is made of conductive metal to electrically connect the first electrode plate 111 of the electrode assembly 110 and the can 120.

The first current collector plate 150 includes an electrode plate contact portion 151 in contact with the non-coating portion 111A of the first electrode plate 111 of the electrode assembly 110, a can contact portion 152 in contact with the can 120, and a connecting portion 153 connecting (e.g., extending between) the electrode plate contact portion 151 and the can contact portion 152.

The connecting portion 153 may be bent at least once. In the drawing, the connecting portion 153 is shown as being bent three times. Through this bending, even if the electrode assembly 110 partially moves or expands within the can 120, the connecting portion 153 elastically absorbs such movement, thereby stably maintaining the electrically connected state between the electrode assembly 110 and the can 120.

The electrode plate contact portion 151 of the first current collector plate 150 may be welded to the non-coating portion 111A of the first electrode plate 111 of the electrode assembly 110. In addition, the can contact portion 152 is illustrated as being interposed and fixed between the beading part 122A of the can 120 and the first gasket 140. In one embodiment, the electrode plate contact portion 151 of the first current collector plate 150 is welded to the non-coating portion 111A of the first electrode plate 111 of the electrode assembly 110, and the can contact portion 152 of the first current collector plate 150 is disposed on the beading part 122A of the can 120, thereby electrically connecting the first electrode plate 111 of the electrode assembly 110 and the can 120. Then, the first gasket 140 is placed on the beading part 122A of the can 120, covering the can contact portion 152 of the first current collector plate 150, the cap plate 130 is seated thereon, and the crimping part 122B is then formed by bending the upper end of the can 120 together with the first gasket 140, thereby pressing and fixing the cap plate 130 and the first current collector plate 150. However, present disclosure is not necessarily limited to the above structure. In some embodiments, the cap plate 130 may be directly welded and fixed to the upper end of the can 120. In such an embodiment, the first gasket 140 may be omitted and the can contact portion 152 of the first current collector plate 150 may be welded to the can 120 or to the cap plate 130.

The terminal 160 is installed in the hole 121A in the lower surface 121 of the can 120 and is made of a conductive metal to be electrically connected to the second electrode plate 112 of the electrode assembly 110 through the second current collector plate 180. Therefore, as described above, when the second electrode plate 112 is a positive electrode plate, the terminal 160 has a positive polarity.

The terminal 160 has a larger diameter than the hole 121A in the lower surface 121 of the can 120 and may have an outer portion 161 supported on (e.g., contacting) the outside of the lower surface 121, an inner portion 162 having a larger diameter than the hole 121A in the lower surface 121 of the can 120 and supported from (e.g., contacting) the inside of the lower surface 121, and a connecting portion 163 inserted through (or extending through) the hole 121A in the lower surface 121 of the can 120 and connecting the outer portion 161 and the inner portion 162.

The terminal 160 may be installed, for example, by riveting. For example, the inner portion 162 and the connecting portion 163 are inserted into the hole 121A when the inner portion 162 has a diameter equal to or smaller than the hole 121A in the lower surface 121 of the can 120, and then, the inner portion 162 is deformed to have a larger diameter than the hole 121A, thereby fastening the terminal 160 to the hole 121A.

The second gasket 170 is disposed between the can 120 and the terminal 160 to tightly seal a space therebetween while insulating the can 120 and the terminal 160 from each other.

The second current collector plate 180 is disposed below the electrode assembly 110 and is made of a conductive metal to electrically connect the second electrode plate 112 of the electrode assembly 110 to the terminal 160. To this end, the second current collector plate 180 may be welded to the non-coating portion 112A of the second electrode plate 112 of the electrode assembly 110 and to the inner portion 162 of the terminal 160.

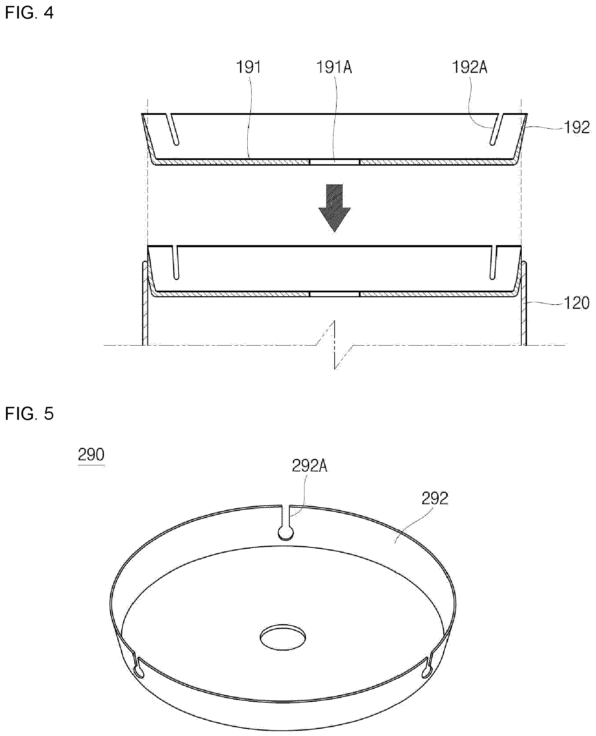

FIG. 3 is a cross-sectional perspective view of the insulator 190 in the secondary battery 100 shown in FIGS. 1 and 2. FIG. 4 is a schematic diagram of the secondary battery 100 illustrating a process of inserting the insulator 190 into the can 120.

Referring to FIGS. 2 and 3, the insulator 190 is disposed under the second current collector plate 180 to insulate the can 120 from the electrode assembly 110 and the second current collector plate 180.

The insulator 190 may have a plate-shaped portion 191 formed in a shape corresponding to the lower surface 121 of the can 120 and a wing portion 192 extending upwardly from the circumference of the plate-shaped portion 191.

The plate-shaped portion 191 may have a diameter approximately equal to or slightly smaller than that of the can 120. The plate-shaped portion 191 may have a slightly smaller diameter than the can 120 so that the insulator 190 can be smoothly inserted into the can 120. In addition, the plate-shaped portion 191 may have a hole 191A to provide a space in which the terminal 160 is installed.

The wing portion 192 extends upwardly from the circumference of the plate-shaped portion 191 to surround (e.g., to surround a periphery of) the lower side of the electrode assembly 110. The wing portion 192 may be formed to have an upper end having a slightly larger diameter than the can 120 at an initial stage, that is, before the insulator 190 is inserted into the can 120. Therefore, as the insulator 190 is inserted into the can 120, the upper end of the wing portion 192 may be deformed to have a diameter corresponding to that of the can 120, that is, the wing portion 192 can be brought into close contact with the side surface 122 of the can 120 in an interference-fit manner (see, e.g., FIG. 4).

In the illustrated embodiment, the wing portion 192 has a cut portion 192A so that the upper end thereof can be more easily deformed into an intended shape as it is inserted into the can 120. The cut portion 192A is formed to extend downwardly from the upper end of the wing portion 192.

The cut portion 192A may be formed by extending to a boundary between the plate-shaped portion 191 and the wing portion 192, that is, the cut portion 192A may have a length corresponding to the height of the wing portion 192. In another embodiment, the cut portion 192A may be formed to be even longer than the height of the wing portion 192, that is, to extend into the plate-shaped portion 191 from the wing portion 192.

However, in the illustrated embodiment, the cut portion 192A is formed to be shorter than the height of the wing portion 192 to ensure sufficient rigidity by leaving material of the wing portion 192 between the cut portion 192A and the plate-shaped portion 191. That is, the cut portion 192A ends before reaching a boundary between the plate-shaped portion 191 and the wing portion 192.

In addition, the wing portion 192 may be formed to have a plurality of wing portions separated by a corresponding number of cut portions 192A, and the wing portions 192 may be arranged at intervals (e.g., at specific or repeating intervals) along the circumferential direction. In the drawing, the wing portion 192 is illustrated as having three wing portions arranged at equal intervals.

FIG. 5 is a perspective view of an insulator 290 of a secondary battery according to another embodiment of the present disclosure.

When the insulator 290 shown in FIG. 5 is compared with the insulator 190 shown in FIG. 3, there exists a difference with respect to the shape of the cut portion. Because other parts of the secondary battery to which the insulator 290 is included are substantially the same as those of the secondary battery 100 described above, a repetitive description thereof will be omitted.

In the insulator 190, the cut portion 192A is formed to extend in a straight line with a certain width (see, e.g., FIG. 3). In the insulator 290, however, the cut portion 292A has a portion (e.g., an upper portion) extending in a straight line shape and having a constant width and another portion (e.g., a lower portion) having a larger width at the lower portion of the cut portion 292A. For example, the other portion of the cut portion 292A may be formed in a circular shape (see, e.g., FIG. 5).

By this configuration, because two adjacent wing portions 292 can be more easily deformed inwardly to be closer to each other, the insulator 290 can be more easily inserted into the can.

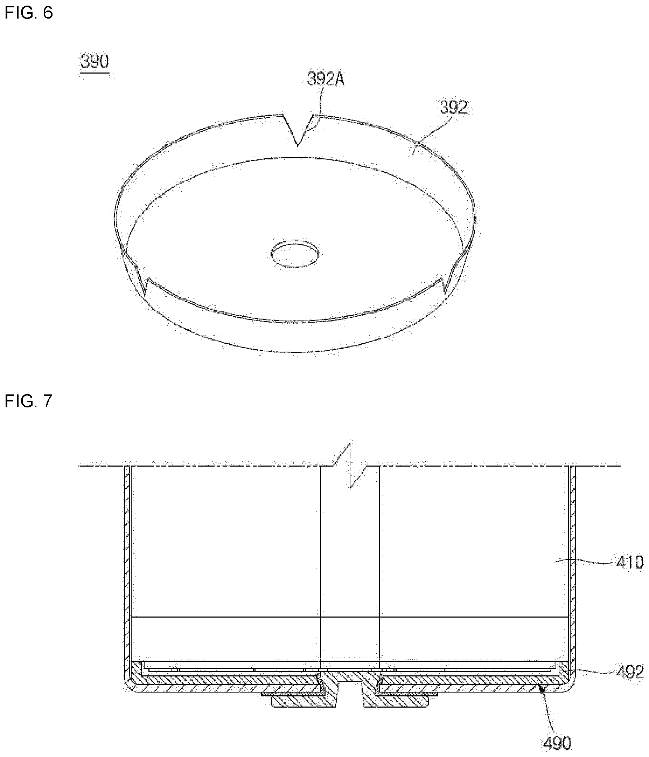

FIG. 6 is a perspective view of an insulator 390 according to another embodiment of the present disclosure.

When the insulator 390 is compared with the insulator 190 described above, there exists a difference with respect to the shape of a cut portion. Because other parts of the secondary battery to which the insulator 390 is included are substantially the same as those of the secondary battery 100 described above, a repetitive description thereof will be omitted.

In the insulator 190 described above, the cut portion 192A is formed to extend in a straight line having a certain width (see, e.g., FIG. 3), but in the insulator 390, the cut portion 392A is formed in a V-shape (see, e.g., FIG. 6).

By this configuration, when two adjacent wing portions 392 are deformed inwardly to be closer to each other, the possibility that the upper ends of the adjacent wing portions 392 inappropriately interfere with each other is reduced.

FIG. 7 is a cross-sectional view of a secondary battery according to another embodiment of the present disclosure, illustrating the area around an insulator 490.

When the secondary battery shown in FIG. 7 is compared with the secondary battery 100 described above, there exists a difference in that a wing portion 492 of the insulator 490 is in contact with the lower end of an electrode assembly 410. Because other parts of the secondary battery described with reference to FIG. 7 are substantially the same as those of the secondary battery 100 described above, a repetitive description thereof will be omitted.

In the secondary battery 100 described above, the wing portion 192 of the insulator 190 extends relatively long to surround the lower side of the electrode assembly 110, but in the secondary battery shown in FIG. 7, the wing portion 492 of the insulator 490 extends relatively short to be in contact with the lower edge of the electrode assembly 410.

By this configuration, the electrode assembly 410 can be designed to be larger using space that would otherwise be occupied by the thickness of the wing portion 192 of the insulator 190 in the secondary battery 100. Thus, the battery capacity can be increased.

In the secondary battery shown in FIG. 7, the cut portion of the wing portion 492 of the insulator 490 may be formed to have a certain width by extending in a straight line, similar to the embodiment shown in FIG. 3, may be formed to have a constant width by extending in a straight line shape and then formed to have a larger width at the lower portion thereof, for example, formed in a circular shape, similar to the embodiment shown in FIG. 5, or may be formed in a V-shape, similar to the embodiment shown in FIG. 6.

As described above, embodiments of the present disclosure provide a secondary battery in which an electrode assembly and a can are insulated from each other by using an insulator, and the insulator has a wing portion and a cut portion formed in the wing portion. Thus, even when the wing portion is formed to have a larger diameter than the can, the wing portion can be easily deformed to a diameter corresponding to that of the can by the cut portion, thereby allowing the insulator to be easily inserted into the can in an interference-fit manner.

The foregoing embodiments are only some embodiments for carrying out the secondary battery according to the present disclosure, which is not limited to the embodiments. It will be understood by a person skilled in the art that various changes in form and details may be made therein without departing from the scope of the present disclosure as defined by the following claims and their equivalents.

## Claims

1. A secondary battery comprising:
an electrode assembly;
a can having a lower surface and a side surface and accommodating the electrode assembly therein;
a cap plate coupled to an upper end of the can;
a terminal on the lower surface of the can; and
an insulator having a plate-shaped portion between the electrode assembly and the lower surface of the can and a wing portion extending upwardly from a circumference of the plate-shaped portion, the wing portion having a cut portion.

2. The secondary battery as claimed in claim 1, wherein the cut portion extends downwardly from an upper end of the wing portion.

3. The secondary battery as claimed in claim 2, wherein the cut portion extends a length smaller than a height of the wing portion.

4. The secondary battery as claimed in any one of claims 1 to 3, wherein the cut portion comprises a plurality of cut portions arranged along a circumferential direction of the wing portion.

5. The secondary battery as claimed in any one of claims 1 to 4, wherein the plate-shaped portion has a smaller diameter than the can.

6. The secondary battery as claimed in any one of claims 1 to 5, wherein, before the insulator is installed into the can, an upper end of the wing portion has a diameter larger than that of the can, and
wherein, when the insulator is accommodated in the can, the wing portion is deformed such that the upper end of the wing portion has a diameter corresponding to that of the can.

7. The secondary battery as claimed in any one of claims 1 to 6, wherein an upper end of the wing portion is in close contact with the side surface of the can.

8. The secondary battery as claimed in any one of claims 1 to 7, wherein the cut portion has a straight line shape.

9. The secondary battery as claimed in any one of claims 1 to 7, wherein the cut portion has a larger width at a lower portion thereof than at an upper portion thereof.

10. The secondary battery as claimed in any one of claims 1 to 7, wherein the cut portion has a V-shape.

11. The secondary battery as claimed in any one of claims 1 to 10, wherein the wing portion extends around a periphery of a lower portion of a side surface of the electrode assembly.

12. The secondary battery as claimed in any one of claims 1 to 10, wherein the wing portion contacts an edge of a lower end of the electrode assembly.
